(19) **Europäisches Patentamt**
**European Patent Office**
**Office européen des brevets**

(11) **EP 4 201 502 B1**

(12) **EUROPEAN PATENT SPECIFICATION**

(45) Date of publication and mention
of the grant of the patent:
**04.02.2026 Bulletin 2026/06**

(51) International Patent Classification (IPC):
**B01D 46/44** (2006.01)    **B01D 46/46** (2006.01)

(52) Cooperative Patent Classification (CPC):
**B01D 46/446; B01D 46/448; B01D 46/46**

(21) Application number: **22215678.8**

(22) Date of filing: **21.12.2022**

(54) **SYSTEM AND METHOD FOR MONITORING THE OPERATION OF INDUSTRIAL AIR FILTRATION SYSTEMS**

SYSTEM UND VERFAHREN ZUR ÜBERWACHUNG DES BETRIEBS VON INDUSTRIELLEN LUFTFILTERSYSTEMEN

SYSTÈME ET PROCÉDÉ DE SURVEILLANCE DU FONCTIONNEMENT DE SYSTÈMES DE FILTRATION D'AIR INDUSTRIELS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **24.12.2021 IT 202100032612**

(43) Date of publication of application:
**28.06.2023 Bulletin 2023/26**

(73) Proprietor: **Losma S.p.a.**
**24035 Curno (IT)**

(72) Inventor: **PADOVAN, Luca Emilio**
**24020 PRADALUNGA BG (IT)**

(74) Representative: **Modiano, Micaela Nadia et al**
**Modiano & Partners**
**Via Meravigli, 16**
**20123 Milano (IT)**

(56) References cited:
**WO-A1-2020/086695    US-A1- 2020 215 915**
**US-A1- 2020 256 578**

## Description

The present invention relates to a method, a detection device and a system for monitoring the operation of industrial air filtration systems.

As is known, industrial air filtration systems are apparatuses that comprise one or more filters for filtering the air in a work environment.

Monitoring systems are systems made up of one or more sensors, connected to an electronic apparatus, the function of which is to repeatedly detect one or more operating parameters of the system to be monitored.

Normally, following each detection, the electronic apparatus compares the detected value with a predetermined threshold value. If the detected value is higher (or, in some cases, lower) than the threshold value, a visual or acoustic signal is produced which alerts the user to the compromised functionality of the monitored system, prompting the user to take the necessary actions.

For industrial air filtration systems, one or more parameters are usually monitored which indicate the clogged status of the filter.

Nowadays monitoring apparatuses exist which offer a visual indication of the clogged status of the filter.

However, these conventional monitoring systems do not allow optimization of the filtration process overall.

Furthermore, other aspects of conventional monitoring systems that have room for improvement are versatility and precision.

Document US2020/215915 discloses a filter element status analysis and notification system according to the preamble of claim 1. In particular, the need is felt for a monitoring system that is capable of being adapted on the basis of the specific operating conditions of the filters to be monitored.

The aim of the present invention consists in providing a method and a system for monitoring the operation of industrial air filtration systems which are capable of solving the abovementioned problems and overcoming the abovementioned limitations of the background art.

Within this aim, an object of the present invention is to provide a method and a system for monitoring the operation of industrial air filtration systems that allow the optimization of the filtration process overall.

Another object of the invention consists in providing a method and a system for monitoring the operation of industrial air filtration systems that are more versatile than the background art and/or enable monitoring that is more precise and reliable.

Another object of the invention consists in providing a method and a system for monitoring the operation of industrial air filtration systems that are capable of being adapted on the basis of the specific operating conditions of the filters to be monitored.

Another object of the invention consists in making available a method and a system for monitoring the operation of industrial air filtration systems that are easy to implement and economically competitive.

This aim and these and other objects which will become more apparent hereinafter are achieved by a method for monitoring the operation of industrial air filtration systems according to claim 1.

This aim and these and other objects are also achieved by a detection device according to claim 4 and by a monitoring system according to claim 7.

Further characteristics and advantages of the invention will become more apparent from the description of some preferred, but not exclusive, embodiments of a method, of a detection device and of a system for monitoring the operation of industrial air filtration systems, which are illustrated by way of non-limiting example with the aid of the accompanying drawings wherein:

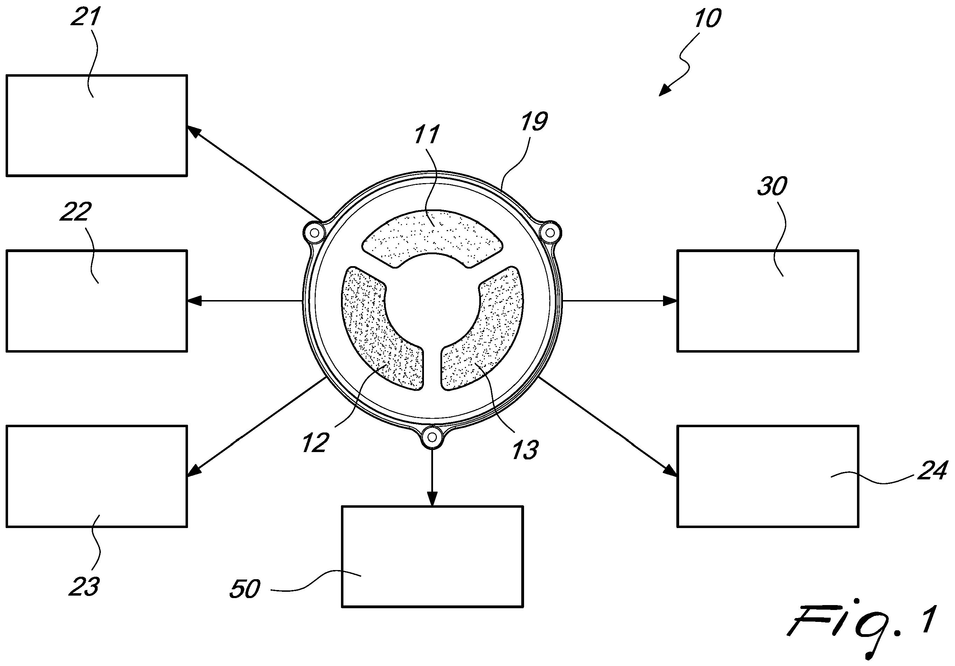

Figure 1 is a schematic diagram of a detection device, according to the invention, in which the components comprised inside the device are indicated with external rectangular blocks;
Figure 2 is a schematic diagram of the operation of the firmware of the detection device of Figure 1;
Figure 3 is a graph that shows the pressure thresholds calculated and used by the device of Figure 1 during the monitoring;

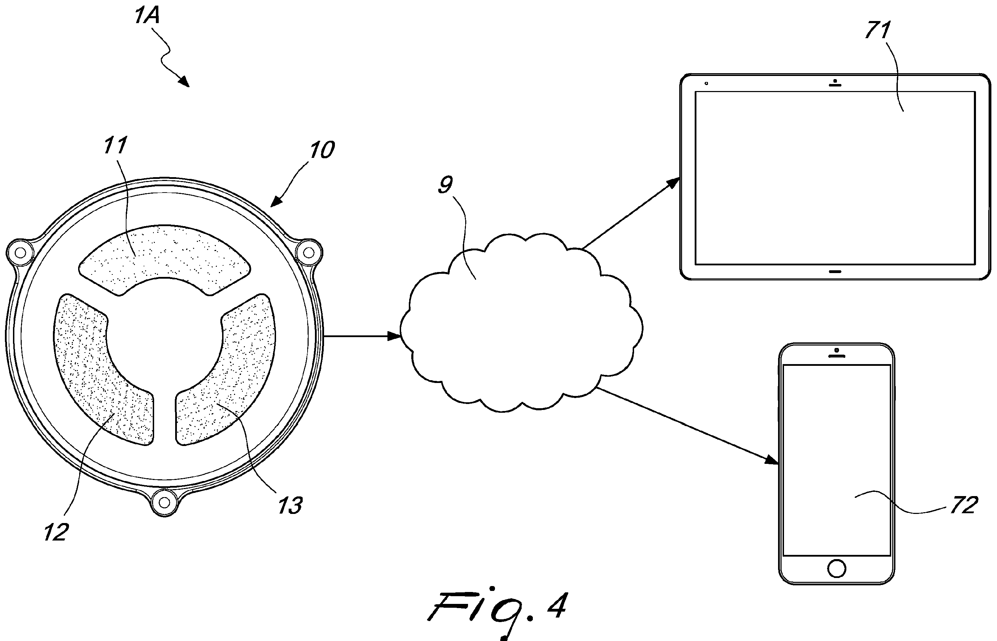

Figure 4 is a schematic diagram of a simplified embodiment of the monitoring system, according to the invention;
Figure 5 is a schematic diagram of a possible advanced embodiment of the monitoring system according to the invention, in which there are a plurality of detection devices;
Figure 6 is a graph of the estimate of clogging of the filter over time, executed in an embodiment of the method according to the invention.
Figure 7 is a block diagram that illustrates the steps of the algorithm executed in order to produce the pressure thresholds.

With reference to the figures, the method serves to provide the monitoring of the operation of the industrial air filtration systems.

By "monitoring" what is meant is the repeated and continuous detection of one or more operating parameters and the analysis of these in order to keep the filtration system under control in order to optionally carry out corrective actions in the event of non-optimal operation and/or in order to optimally program the maintenance.

The method entails detecting a plurality of physical operating parameters of at least one air filter F by means of respective sensors 21, 22, 23, which include at least the suction pressure of the filter, which is detected by means of a pressure sensor 21 (such as preferably a digital pressure temperature probe). The air is usually aspirated using an aspirator R in a conventional manner.

In the method according to the invention, a reference value $P_0$ is defined of the suction pressure, which changes depending on the filtration system to be monitored and which corresponds substantially to the maximum rated value (therefore to 100% of the suction pressure under optimal operating conditions).

Therefore, as a function of such reference value $P_0$ of the suction pressure and on the basis of an algorithm, and more precisely an algorithm of the "dynamic thresholds" type, a series of pressure thresholds $P_1$, $P_2$, $P_3$ are determined which are equal to a fraction of the above mentioned reference value $P_0$.

Several reference pressure values $P_0$ are predetermined experimentally for a series of aspirator categories and then, during suction, the suction pressure value $P_0$ of the filter to be monitored is measured.

This reference pressure value $P_0$ is determined from the stable operating point between the characteristic curve of the fan of the aspirator and the resistive curve of the air handling system under consideration.

From this, the importance of the pressure value $P_0$ becomes apparent in that it defines, from the point of view of fluid dynamics, the initial condition of a non-clogged filter (initial reference) and, using specific percentage values (thresholds), referred to the reference pressure $P_0$, it is possible to define the progressive clogged status of the filter F and the operating status (anomalies in the filtering system).

In acquiring the reference value pressure $P_0$ the SET POINT procedure (initial reference) is carried out; the corresponding clogged statuses and alarm statuses are defined with percentage values referred to the reference pressure value $P_0$ detected.

The percentage values, which are necessary to define the clogging thresholds, i.e. the pressure thresholds $P_1$, $P_2$, $P_3$, are in practice defined by way of experimental and numeric analysis (CFD). For example, in a preliminary step of programming the system, drawing on a special test bench, for each electric power category of aspirators, the reference pressure value $P_0$ (SET POINT) is acquired and subsequently the different clogging statuses are simulated as a function of the different operating conditions of the air handling system.

For example, a first simulated condition is the progressive clogging of the filter F. This first condition simulates the progressive clogging of the filter when the system is subjected to correct maintenance. In this condition the absolute value of the static pressure P(n+1) measured at time (n+1) must be lower than the absolute value of the static pressure P(n) measured at time (n), i.e.:

$$|P(n+1)| < |P(n)|.$$

A second condition that is simulated is that of an operating anomaly (blocked suction duct). In this condition, the absolute value of the static pressure P(n) measured is higher than the absolute value of the static pressure of Set Point $P_0$, i.e.:

$$|P(n)| > |P_0|.$$

Conveniently, for each operating condition simulated, the pressure and the corresponding volumetric flow rate are detected; based on experimental verifications, adequate percentage values (thresholds) can be defined which make it possible to ensure an adequate suction flow rate of the filtering system and, at the same time, maintain a degree of filtration in accordance with the required standards.

As just described, by simulating the clogged statuses as a function of different operating conditions of the air handling system and as a function of different electric power categories of the aspirator R, it is possible to define percentage values (thresholds).

By processing the experimental data, it is possible to group, therefore average, the percentage values as a function of the category of aspirator R; in other words, it is possible to map, for each category of aspirator R, the clogging thresholds $P_1$, $P_2$, $P_3$ as a function of different operating conditions.

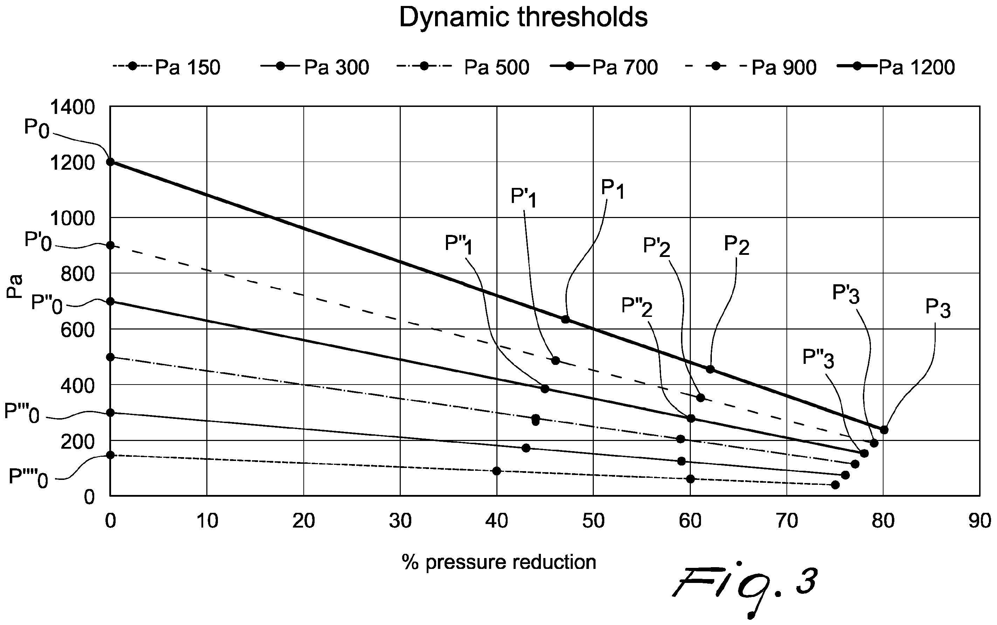

The graph in Figure 3 shows the mapping of the thresholds more clearly.

Therefore, in this preliminary step of programming the system, each reference value $P_0$ is associated with a characteristic set of pressure thresholds $P_1$, $P_2$, $P_3$, in which the percentages of pressure reduction with respect to the reference value $P_0$ are different for each set.

The six tables below give six examples of series (sets) of pressure thresholds $P_1$, $P_2$, $P_3$, which correspond to

those shown in the graph of Figure 3, each one corresponding to a respective rated starting pressure value $P_0$ (the latter being the reference value and being indicated as 100% of threshold.)

| Set 1: 150 Pa | | | | | |
|---|---|---|---|---|---|
| P threshold | % | Reduction P% | Reduction Q% | Pa | delta-Pa |
| $P_0$ | 100 | 0 | 0 | 150 | -- |
| $P_1$ | 60 | 40 | 24 | 90 | 60 |
| $P_2$ | 40 | 60 | 36 | 60 | 30 |
| $P_3$ | 25 | 75 | 45 | 37,5 | |

| Set 2: 300 Pa | | | | | |
|---|---|---|---|---|---|
| P threshold | % | Reduction P% | Reduction Q% | Pa | delta-Pa |
| $P'_0$ | 100 | 0 | 0 | 300 | -- |
| $P'_1$ | 57 | 43 | 25,8 | 171 | 129 |
| $P'_2$ | 41 | 59 | 35,4 | 123 | 48 |
| $P'_3$ | 24 | 76 | 45,6 | 72 | |

| Set 3: 500 Pa | | | | | |
|---|---|---|---|---|---|
| P threshold | % | Reduction P% | Reduction Q% | Pa | delta-Pa |
| $P''_0$ | 100 | 0 | 0 | 500 | -- |
| $P''_1$ | 56 | 44 | 26,4 | 280 | 220 |
| $P''_2$ | 41 | 59 | 35,4 | 205 | 75 |
| $P''_3$ | 23 | 77 | 46,5 | 115 | -- |

| Set 4: 700 Pa | | | | | |
|---|---|---|---|---|---|
| P threshold | % | Reduction P% | Reduction Q% | Pa | delta-Pa |
| $P'''_0$ | 100 | 0 | 0 | 700 | -- |
| $P'''_1$ | 55 | 45 | 27 | 385 | 315 |
| $P'''_2$ | 40 | 60 | 36 | 280 | 105 |
| $P'''_3$ | 22 | 278 | 46,8 | 154 | -- |

| Set 5: 900 Pa | | | | | |
|---|---|---|---|---|---|
| P threshold | % | Reduction P% | Reduction Q% | Pa | delta-Pa |
| $P''''_0$ | 100 | 0 | 0 | 900 | -- |
| $P''''_1$ | 54 | 46 | 27,6 | 486 | 414 |
| $P''''_2$ | 39 | 61 | 36,6 | 351 | 135 |
| $P''''_3$ | 21 | 79 | 47,4 | 189 | -- |

| Set 6: 1200 Pa | | | | | |
|---|---|---|---|---|---|
| P threshold | % | Reduction P% | Reduction Q% | Pa | delta-Pa |
| $P'''''_0$ | 100 | 0 | 0 | 1200 | -- |

(continued)

| Set 6: 1200 Pa | | | | | |
| --- | --- | --- | --- | --- | --- |
| P threshold | % | Reduction P% | Reduction Q% | Pa | delta-Pa |
| $P''''_1$ | 53 | 47 | 28,2 | 636 | 564 |
| $P''''_2$ | 38 | 62 | 37,2 | 456 | 180 |
| $P''''_3$ | 20 | 80 | 48 | 240 | -- |

It should be noted that for each set, the percentage reductions of the pressure thresholds $P_1$, $P_2$, $P_3$ with respect to the reference value $P_0$ are different: in set 1, the threshold $P_1$ is equal to 60% of the reference value $P_0$, while in set 2, the threshold $P'_1$ is equal to 57% of the reference value $P'_0$, etc.

These threshold sets, thus predetermined, are stored in the programmable logic unit 50 of the detection device 10, which is programmed to execute the algorithm (the dynamic threshold algorithm) which, once installed in the system, compares the suction pressure of the filter F in the initial condition, which constitutes the reference value $P_0$ for that filter F, and based on this reference value identifies, from the stored sets, the corresponding set of pressure thresholds $P_1$, $P_2$, $P_3$ (which is the set in which the $P_0$ value corresponds to the measured value, or the set with the nearest $P_0$ value). The pressure thresholds $P_1$, $P_2$, $P_3$ are therefore determined as a fraction of the reference value $P_0$ that corresponds to the characteristic percentage of the identified set: if, for example, the identified set is set 1 of the first table shown above, then the threshold $P_1$ will be determined as 60% of the measured reference value $P_0$, the threshold $P_2$ will be determined as 40% of the measured reference value $P_0$, and so on.

Preferably, before identifying the set to use on the basis of the comparison between the measured $P_0$ and the characteristic $P_0$ values of each set, the algorithm conducts a preliminary check to verify whether the measured initial pressure value $P_0$ falls inside or outside an operating range: if the measured $P_0$ value is lower than a minimum threshold (for example 150 Pa) or higher than a maximum threshold (for example 2000 Pa) then an error signal is issued, indicating that the detection device 10 cannot function correctly and therefore cannot be installed.

In practice, after the various sets of thresholds have been defined (using the procedure described), these are stored in the memory (EEPROM) of the detection device 10, for example as in the tables shown above. Once the detection device 10 is installed, the suction pressure value $P_0$ of the filter F is acquired, which will define the initial operating condition of the filtration system, and the firmware, using control logic, will automatically set the best possible threshold level that is suited to the operating condition of the filtering system; this makes it possible to optimize the duration of the filters, while at the same time ensuring a high degree of filtration of the filtering system.

The detection device 10, therefore, is dynamically capable of setting optimal threshold levels of $P_1$, $P_2$, $P_3$ for a truly vast range of initial operating conditions of filtration systems; this is where the concept of "dynamic thresholds" derives from.

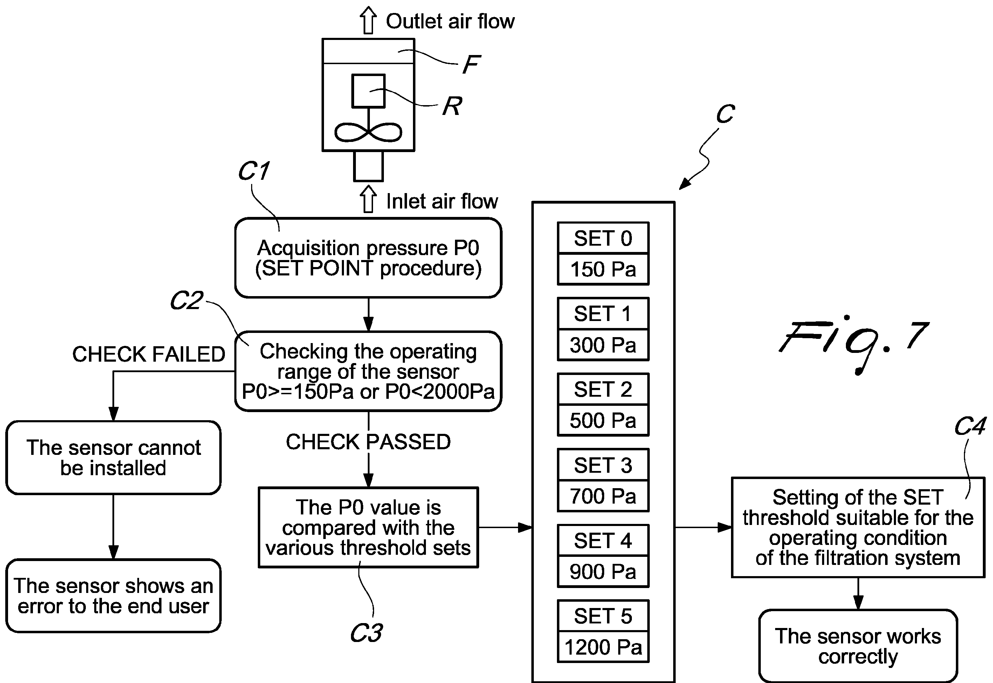

Figure 7 is a block diagram illustrating the steps of the algorithm C (dynamic threshold algorithm) executed by the programmable logic unit 50 in order to produce the pressure thresholds $P_1$, $P_2$, $P_3$, and this algorithm is implemented in the firmware of the programmable logic unit 50 of the detection device 10.

Once the sensor 10 is installed, with reference to Figure 7, the method entails applying the algorithm C which entails the following steps:

c1) measure the suction pressure value $P_0$ (set point), which constitutes the reference value;
c2) (optionally) verify whether such reference value $P_0$ is comprised within a predetermined operating range of the detection device 10 (for example between 150 and 2000 Pa);

- if the outcome of the verification is negative then that means that the detection device 10 cannot operate correctly and an error signal is issued;
- if the outcome of the verification is positive ($P_0$ falls within the predetermined operating range) then the method proceeds with the subsequent steps:

c3) compare the measured reference value $P_0$ with the reference values $P_0$, $P'_0$, $P''_0$, $P'''_0$, $P''''_0$, $P'''''_0$ of the sets that were stored previously in order to identify which of these sets corresponds to or is nearest to the measured value, and then
c4) identify the corresponding set of pressure thresholds $P_1$, $P_2$, $P_3$ (which is identified by the respective reference value $P_0$, $P'_0$, $P''_0$, $P'''_0$, $P''''_0$, $P'''''_0$ that is identified as corresponding or nearest) and define the series of pressure thresholds $P_1$, $P_2$, $P_3$, which are used for subsequent comparisons during monitoring, on the basis of the thresholds belonging to the set identified (the thresholds $P_1$, $P_2$, $P_3$ belonging to the identified set or the percentage values of the identified set are adopted: if for example the measured reference value $P_0$ is 150 Pa, then set 1 of the table shown previously will be identified, and therefore the threshold $P_1$ will be 60% of the measured reference value $P_0$, the threshold $P_2$ will be 40% of the measured reference value $P_0$, the threshold $P_3$ will be 25% of the measured reference value $P'_0$.

Therefore, in summary, in the preferred embodiments, defining a reference value $P_0$ of the suction pressure is done by measuring the suction pressure value $P_0$ of the filter F, during installation, and this measured suction value of the filter F will constitute the above mentioned reference value $P_0$.

The algorithm, in order to produce the series of pressure thresholds $P_1$, $P_2$, $P_3$, comprises, in brief, at least the following steps:

- compare said measured reference value $P_0$ with predetermined reference values $P_0$, $P'_0$, $P''_0$, $P'''_0$, $P''''_0$, $P'''''_0$, each one indicative of a predetermined set that comprises a respective series of pressure thresholds and/or percentages, in order to identify the corresponding or nearest predetermined reference value $P_0$, $P'_0$, $P''_0$, $P'''_0$, $P''''_0$, $P'''''_0$;
- define the series of pressure thresholds $P_1$, $P_2$, $P_3$ which are used for subsequent comparisons, based on the thresholds or percentages belonging to the set of which the corresponding or nearest predetermined reference value $P_0$, $P'_0$, $P''_0$, $P'''_0$, $P''''_0$, $P'''''_0$ is indicative, as described previously.

The method entails performing repeated detections of the abovementioned plurality of parameters including at least the pressure and, after each detection, comparing the detected pressure with the abovementioned pressure thresholds $P_1$, $P_2$, P3(determined using the algorithm C).

On the basis of the comparison between the detected pressure and the pressure thresholds $P_1$, $P_2$, $P_3$, an output message is then produced, such as for example the powering-on of an indicator light selected from several different indicator lights of different colors on the basis of the outcome of the comparison, or another output message by means of an interface system 11, 13, 13 (i.e. one or more devices adapted to produce visual and/or acoustic signals). For example, in the preferred embodiment, the method selectively activates a first emitter 11 of colored light or a second emitter 12 of colored light or a third emitter 13 of colored light (having different colors) depending on whether, respectively, the detected pressure is equal to or greater than (or equal to or less than) a first pressure threshold $P_1$, or a second pressure threshold $P_2$, or a third pressure threshold $P_3$.

Preferably, the reference value $P_0$ is comprised between 90 and 2500 Pa.

In the preferred embodiments, the method comprises the further steps of:

- sending, by means of a data transfer network 9, the detections performed to at least one electronic device 71, 72 (preferably an electronic device provided with a screen, such as a tablet or a smartphone or a computer or a smartwatch or the like);
- running, by means of the electronic device, a program which calculates, as a function of the detected suction pressure, the air flow rate Y aspirated by the filter F by means of one or more polynomial functions having the form

$$Y = aX^4 + bX^3 + cX^2 + dX + f,$$

wherein:

Y is the air flow rate aspirated by the filter F,
X is the detected suction pressure value, and
a, b, c, d and f are predetermined positive or negative coefficients (i.e. predetermined real numbers, positive or negative);

- producing, by means of the electronic device 71, 72, a message indicating the air flow rate Y aspirated by the filter F (preferably by indicating on the screen, in a graphical interface, the calculated value of the air flow rate Y).

For example, in a possible embodiment, a polynomial function is the following: $Y = -0.0000000424X^4 +00000719116X^3 -0.0421226276X^2 + 9.2530574254 - 416.6889544467$.

The polynomial functions can be calculated for each type of filter F by means of numerical and experimental analyses.

In more detail, the a, b, c, d, f coefficients of the polynomial functions derive from the characteristic curves of the aspirators, which are obtained through experimental measurements.

For example, by using a wind tunnel it is possible, for each type of aspirator, to obtain the corresponding characteristic curve of operation, i.e. the head/flow rate curve (P-Q curve), i.e. the head (expressed in Pa) as a function of the flow rate (expressed in $m^3/h$), which can be represented in a graph with the flow rate on the abscissa and the head on the ordinate.

Specifically, the pressure values and the flow rate values are measured experimentally at different points of operation of the aspirator being examined.

In order to be able to measure the flow rate developed by the aspirator by measuring the suction pressure (indirect measurement of the flow rate), it is necessary to express the characteristic head/flow rate curve (P-Q curve) in terms of flow rate/head (Q-P curve), i.e. by expressing the flow rate as a function of the head.

From this latter curve, using numerical calculation operations, it is possible, in a known manner, to extrapolate a polynomial trend line of the fourth degree and therefore make the polynomial equation explicit with the corresponding polynomial coefficients.

Therefore a possible procedure to develop the polynomial equation comprises the following mathematical steps:

- **characterize** the P-Q curve through experimentation (in a known manner, using a plurality of measurements);
- express the curve in terms of flow rate/head Q-P curve);
- from the Q-P curve, extrapolate a polynomial trend line of the fourth degree;
- make the polynomial equation explicit with the corresponding polynomial coefficients a, b, c, d, f;
- once the polynomial equation (which is implemented in the software program of a electronic device 71, 72 to which the detection device 10 is connected) is known, it is possible, using the pressure value measured by the pressure sensor 21 of the detection device 10, to indirectly calculate the flow rate developed by the aspirator R. Through experimental verifications it is possible to obtain an accuracy of +/- 15% on the measurement of the flow rate.

In practice, the pressure sensor 21 detects a pressure value at a certain instant (n) which corresponds to a flow rate value at that instant (n). By repeated measurements, the variation of the flow rate value can be evaluated.

The procedure described above for obtaining the polynomial function (and therefore the polynomial coefficients a, b, c, d, f) can be advantageously repeated for many models of aspirator; the concept of this technique is to create, for each model of aspirator, an experimentally-based polynomial equation that is capable of measuring, with a certain degree of accuracy, the flow rate developed by the aspirator. This makes it possible to obtain a detection device 10 that is capable of accurately detecting, at low cost, the flow rate developed by low/medium power aspirators.

All the polynomial functions, thus obtained, are stored in the software program, which will manage them as a function of the configuration of the detection device 10 installed on the specific aspirator R.

In the preferred embodiments, the program in which the calculation of the flow rate using the polynomial function is implemented is an application that is adapted to be executed under a conventional operating system (or firmware), preferably an Android® application.

The same program preferably comprises the provision of a graphical interface which is configured to also show the values of the other parameters detected and optionally a signal indicating the status of the filter F on the basis of the comparison between the detected suction pressure and the pressure thresholds $P_1$, $P_2$, $P_3$.

In more detail, the physical operating parameters to be detected to which reference is made are physical values that can be detected using sensors and are associated, directly or indirectly, with one or more aspects of the operation of the filtration system; preferably such physical operating parameters also comprise, in addition to the suction pressure, either or both of the temperature of the aspirated air, detected by means of a temperature sensor 23, and a parameter indicating the vibration of the filter F (for example vibration frequency and/or intensity), detected by means of an accelerometer 22.

The Applicant has found that the temperature of the aspirated air is a parameter of great importance: operating with a temperature value higher than the maximum temperature permitted by the filtering medium of the filter F can lead to a drastic reduction of filtration efficiency and compromise the structural integrity of the filtering medium.

The detection device 10, provided with a temperature sensor 23 (thermal probe), will detect the temperature of the aspirated air flow; once the maximum temperature threshold is reached, the sensor will alert the operator with a visual alarm. The maximum temperature threshold is conveniently defined in advance, experimentally.

The value of the vibrations makes it possible to evaluate the level of noise (generated by the vibrations) of the aspirator operating under preset operating conditions. A high vibration value indicates a possible malfunctioning of the electric motor and of the impeller of the fan. Monitoring this parameter makes it possible to plan predictive maintenance schedules, so preventing sudden machine stops. The maximum vibration threshold is conveniently defined in advance, experimentally.

According to an optimal solution, both the temperature and the parameter indicating the vibrations are detected: by combining these two parameters, and also the suction pressure value, it is possible to implement predictive maintenance schedules with artificial intelligence techniques.

Optionally, the program also shows, in the graphical interface on the screen, the number of hours the monitored filter F has been in use.

The present invention also relates to a detection device for monitoring the operation of industrial air filtration systems, generally indicated with the reference numeral 10, which is adapted to carry out the method just described.

In the preferred embodiments, this detection device 10 comprises an outer shell 19 for containment which is preferably substantially cylindrical (as in the example shown), or frustum-shaped or dome-shaped or has another shape chosen according to requirements, which accommodates at least partially inside it electronic components described below.

The detection device 10 comprises one or more sensors 21, 22, 23 for the detection of physical operating parameters of an air filter F, which include at least one pressure sensor 21 configured to detect the suction pressure of a filter F of the filtration system.

The detection device 10 also comprises an interface system 11, 12, 13 (for example composed of three emitters 11, 12, 13 of light visible from outside the shell 19) which is adapted to produce visible and/or audible signals.

According to the invention, the detection device 10 comprises a programmable logic unit 50 (preferably a microcontroller, or a microprocessor or the like) which is functionally connected to the sensors 21, 22, 23 and configured to determine, as a function of a reference value $P_0$ of the suction pressure, the series of pressure thresholds $P_1$, $P_2$, $P_3$ which are equal to a fraction of such reference value $P_0$, on the basis of an algorithm (as described with reference to the method).

The detection device 10 is configured to perform repeated detections of the plurality of parameters by means of the sensors 21, 22, 23.

After each detection, the detection device 10 compares, by way of the programmable logic unit 50, the detected pressure with the pressure thresholds.

The detection device 10 is therefore configured to produce, by means of the interface system 11, 12, 13, an output message on the basis of the comparison between the detected pressure and the pressure thresholds $P_1$, $P_2$, $P_3$ (as already described with reference to the method).

Preferably, the detection device 10, in addition to the pressure sensor 21, also comprises one or both of a temperature sensor 23 for detecting the temperature of the aspirated air and an accelerometer 22 for detecting a parameter indicating the vibration of the filter F (preferably the vibration frequency).

Optionally, the detection device 10 further comprises a digital temperature sensor 23 which is configured to measure the temperature of the internal electronic components of said detection device 10; this digital temperature sensor 23 is also functionally connected to the programmable logic unit 50.

In the preferred embodiments, the detection device 10 also comprises a wireless data transmission module 30 (or a wireless LAN module), which is functionally connected with the programmable logic unit 50 and is configured to send data relating to the measurements performed by the sensors described previously (including the digital temperature sensor 23 if present).

In the preferred embodiments, the detection device 10 is part of a monitoring system 1A, 1B for the provision of the preferred embodiments of the method according to the invention, in which the wireless data transmission module 30 sends the data to at least one electronic device 71, 72, by means of at least one data transfer network 9, 9', 9", 9"'.

In more detail, the monitoring system 1A, 1B, in general terms, comprises:

- at least one detection device 10, 10', according to the invention, provided with a wireless data transmission module 30;
- at least one electronic device 72 (preferably provided with a screen, such as a tablet or a smartphone or a computer or a smartwatch or the like) which is configured to provide the abovementioned steps of running the program which calculates, as a function of the detected suction pressure, the air flow rate Y aspirated and to produce a message indicating the air flow rate aspirated by the filter F (as previously described);
- at least one data transfer network 9, 9', 9" which is functionally connected to the data transfer module 30 and to the electronic device 72 so as to allow the exchange of data between them.

The at least one data transfer network 9, 9', 9" preferably comprises a local data network and/or, even more preferably, the internet.

In the preferred embodiments, the one or more detection devices 10, 10' and the one or more electronic devices 71, 72, during operation, are all connected to the internet thus providing an IoT (Internet of Things) system.

The monitoring system 1A, 1B, can comprise a plurality of detection devices 10, 10' connected to the at least one electronic device 71, 72 by way of data transfer networks 9, 9', 9", 9"'.

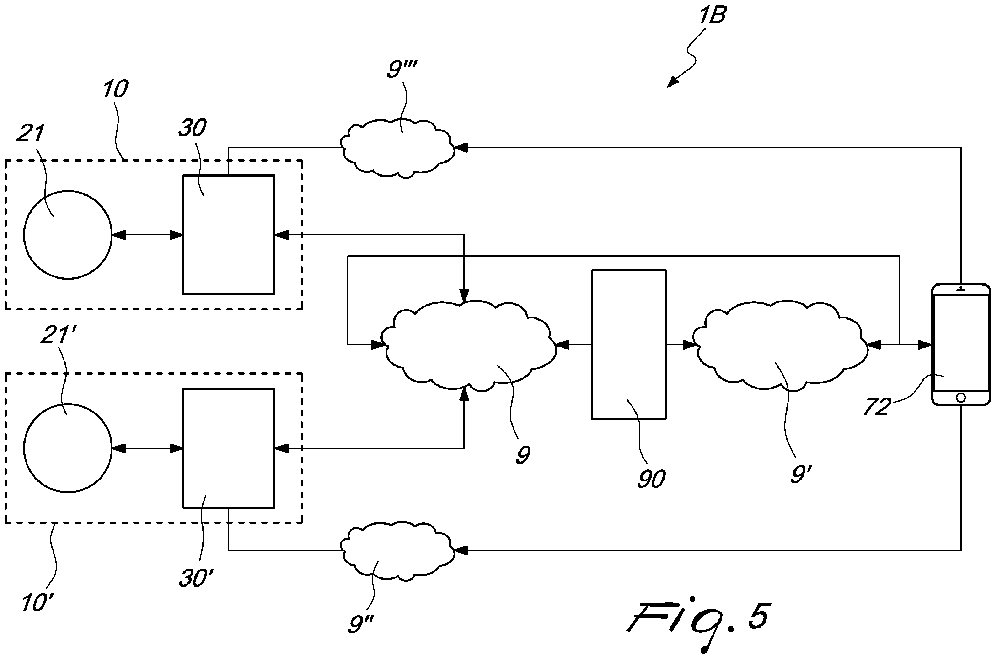

Figure 5 shows an example of architecture of a monitoring system 1B according to the invention, in which for convenience only two detection devices 10, 10' are illustrated but which can equivalently be present in any number. Note that each detection device 10, 10' is directly connected to the at least one electronic device 72 by means of a respective data transfer network 9", 9"' set up between the data transfer module 30, 30' of said detection device and the electronic device 72; at the same time, in parallel, all the detection devices 10, 10' are connected to a data transfer network 9 they have in common inside the system (for example a wireless local area network (WLAN)) which is in turn connected - for example by means of a network device 90 (gateway) to a network outside the system 9' (for example a company WLAN) and via this (and via the internet) to the electronic device 72.

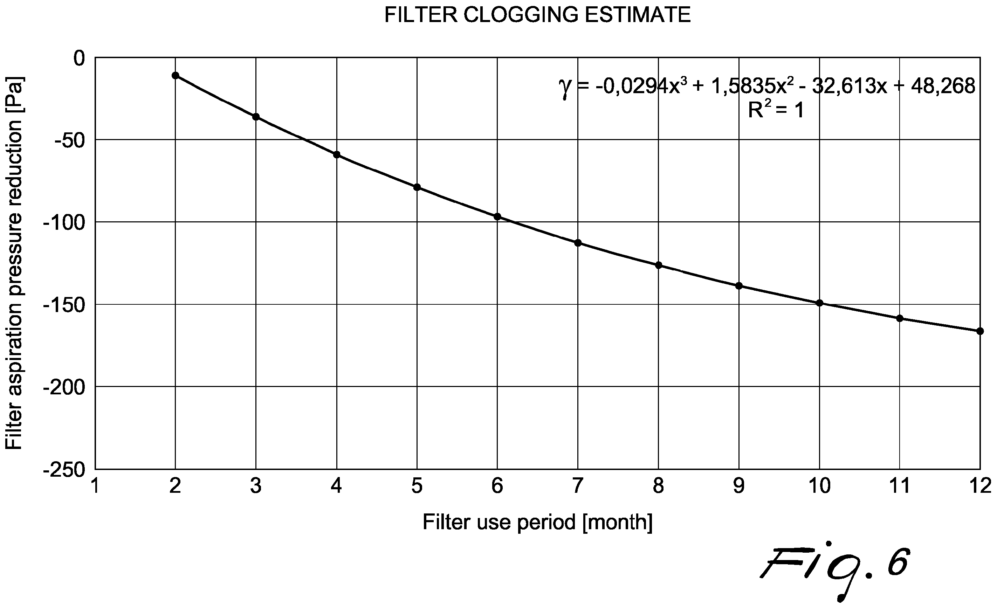

Advantageously, through the monitoring and backing-up of the data corresponding to the parameters acquired by the sensors 21, 22, 23, the program (the Android® application) installed in the electronic device 72 is capable of producing predictive maintenance schedules: as an example, Figure 6 is a graph showing the predicted clogging of a filter F, taking a period of use equal to one year, produced on the basis of the data corresponding to the suction pressure.

In practice, firmware installed in the electronic board of the detection device 10, and more precisely in the programmable logic unit 50, will have the task of processing the data acquired by the various sensors and of managing the sending of data packets to the wireless data transmission module 30 which is integrated in the electronics of the detection device 10.

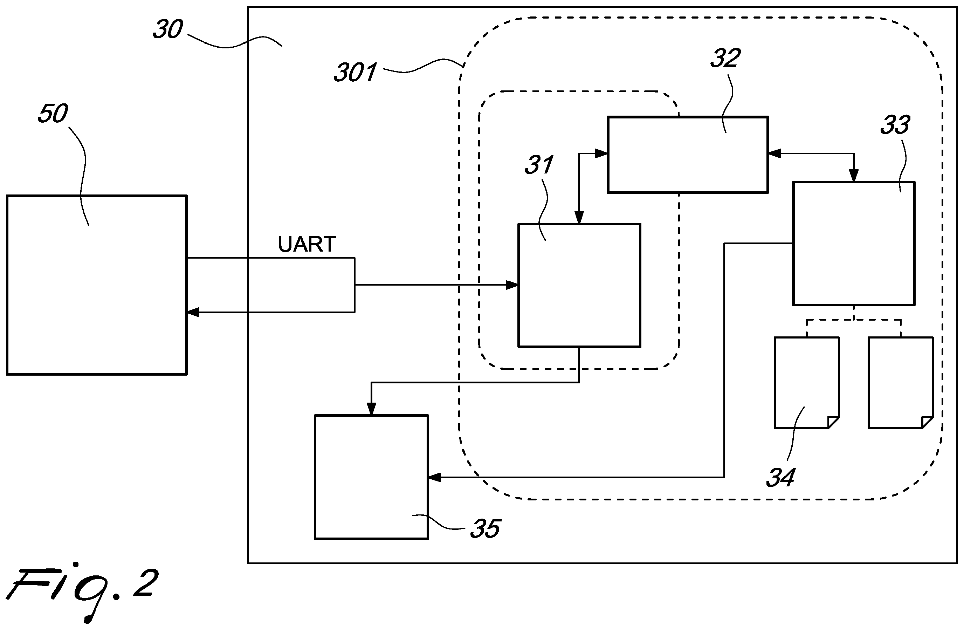

The firmware architecture of the preferred embodiment is shown schematically in Figure 2; with particular reference to that figure, below the operation at the computer level is described in more detail.

At boot time, the wireless data transfer module 50 starts a program 301 (preferably a Python program), i.e. Flask Script 301, which takes care of creating and managing the basic components, i.e.: Serial Reader 31, REST API 33, shared object 32 (for example a default.json file).

At boot time, the firmware of the programmable logic unit 50 (microcontroller) runs its boot sequence and starts sending, preferably every ten seconds, data strings (for example JSON strings) to the wireless data transfer module 30 and more precisely to the Serial Reader 31; preferably the data connection over which these are sent is an UART.

The wireless transfer data module 30 boots the operating system, attempting to connect to the data transfer network 9 (such as a wireless LAN infrastructure, for example a company WLAN, which is previously configured by means of a web interface provided by the wireless data transfer module 30). If there is no configuration, if authentication on the data transfer network 9 infrastructure fails, or if there is no network infrastructure, the wireless data transfer module 30 will set up its own wireless LAN data transfer network 9', acting as an access point.

Once the system is booted, the wireless data transfer module 30 will start the Flask Script 301, which will: start the Flask web server, making the REST API 33 available, initialize the circular buffers 35, activate the data structures for communication with the UART reading process, and start the process to read the serial communication.

Then, during the step of monitoring, it starts the continuous reading of the data coming from the programmable logic unit 50 (microcontroller) and publishes it by means of REST API 33.

Advantageously, the firmware of the programmable logic unit 50 (microcontroller) sends its readings asynchronously, for example every ten seconds.

Conveniently, the wireless data transmission module 30 continues reading the serial communication, one line at a time, saves the readings of the sensors in dedicated circular buffers and sends the alarm events through the multi-process namespace, making them available to the REST API 33.

With regard to the configuration, and in particular the authentication mechanism, in the preferred embodiments of the monitoring system 1A, 1B, the system makes use of HTTP Basic Authentication (BA). This is the simplest technique for allowing access to web resources with access control because it does not require cookies, session IDs and login pages.

Basic authentication uses standard static HTTP headers that do not require handshaking, which is carried out in advance. The authentication data can be passed in the URL, such as for example: https://username:password@www.example.com/path.

The credentials are inserted statically in the configuration files of the module.

Preferably, the firmware is released with an SSL 34 certificate and associated keys signed by the Certification Authority of the eLUX Laboratory.

The rest of the operation of the system 1A, 1B is clear and evident from the foregoing description.

In practice it has been found that the method, the detection device and the system, according to the present invention, achieve the intended aim and objects in that they allow the optimization of the filtration process overall.

Another advantage of the method, of the detection device and of the system, according to the invention, consists in the fact that they are more versatile than the background art and they enable monitoring that is more precise and reliable.

Another advantage of the method, of the detection device and of the system, according to the invention, consists in the fact that they are capable of being adapted on the basis of the specific operating conditions of the filters to be monitored.

Another advantage of the method, of the detection device and of the system, according to the invention, consists in the fact that they are easy to implement and economically competitive.

The method, the detection device and the system thus conceived are susceptible of numerous modifications and variations, all of which are within the scope of the appended claims.

Moreover, all the details may be substituted by other, technically equivalent elements.

The disclosures in Italian Patent Application No. 102021000032612 from which this application claims priority are disclosed herein.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

**Claims**

1.  A method for monitoring the operation of industrial air filtration systems, which comprises the steps of:

    a) detecting one or more physical operating parameters of an air filter (F) by means of respective sensors (21, 22, 23), which include at least the suction pressure of the filter (F), which is detected by means of a pressure sensor (21);

    **characterized in that** it comprises the additional steps of:

    b) defining a measured reference value ($P_0$) of the suction pressure by measuring a suction pressure value of the filter (F) during an installation phase, said measured suction pressure value of the filter (F) constituting said measured reference value ($P_0$);
    c) as a function of said measured reference value ($P_0$) of the suction pressure and on the basis of an algorithm (C), determining a series of pressure thresholds ($P_1$, $P_2$, $P_3$) which are equal to a fraction of said measured reference value ($P_0$);
    d) performing repeated detections of said one or more parameters, after each detection comparing the detected pressure with said pressure thresholds ($P_1$, $P_2$, $P_3$);
    e) producing an output message on the basis of the comparison between the detected pressure and said pressure thresholds ($P_1$, $P_2$, $P_3$), wherein, in said step c), said algorithm (C), in order to produce the series of pressure thresholds ($P_1$, $P_2$, $P_3$), comprises the following sub-steps:

    c1) compare said measured reference value ($P_0$) with predetermined reference values ($P_0$, $P'_0$, $P''_0$, $P'''_0$, $P''''_0$, $P'''''_0$) which are stored in a programmable logic unit (50) before said installation phase, each one indicative of a predetermined set that comprises a respective series of pressure sub-values that are fractions of the predetermined reference values ($P_0$, $P'_0$, $P''_0$, $P'''_0$, $P''''_0$, $P'''''_0$) and/or of percentages, in order to identify the corresponding or nearest predetermined reference value ($P_0$, $P'_0$, $P''_0$, $P'''_0$, $P''''_0$, $P'''''_0$);
    c2) define the series of pressure thresholds ($P_1$, $P_2$, $P_3$) which are used for subsequent comparisons in step d), based on said sub-values or percentages belonging to the set of which the corresponding or nearest predetermined reference value ($P_0$, $P'_0$, $P''_0$, $P'''_0$, $P''''_0$, $P'''''_0$) is indicative;

    in the sub-step c2), the series of pressure thresholds ($P_1$, $P_2$, $P_3$) which are used for subsequent comparisons in step d) being determined as percentages or fractions of the measured reference value ($P_0$) that correspond to said percentages or fractions of the identified set.

2.  The method according to claim **1,** comprising the additional steps of:

    f) sending, via a data transfer network (9), said detections to at least one electronic device (71, 72);
    g) running, by means of said electronic device, a program which calculates, as a function of the detected suction pressure, the air flow rate (Y) aspirated by the filter (F) by means of one or more polynomial functions having the form

$$Y = aX^4 + bX^3 + cX^2 + dX + f,$$

    wherein:

    $Y$ is the air flow rate aspirated by the filter,
    $X$ is the detected suction pressure value, and
    **a, b, c, d** and **f** are predetermined positive or negative coefficients;

    h) producing, by means of said electronic device (71, 72), a message indicating said air flow rate aspirated by the filter (F).

3. The method according to one or more of the preceding claims, wherein detected physical operating parameters also comprise at least one of:

   - temperature of the aspirated air, detected by means of a temperature sensor (21); and
   - a parameter indicating the vibration of the filter (F), detected by means of an accelerometer (22).

4. A detection device (10) for monitoring the operation of industrial air filtration systems, which comprises:

   - one or more sensors (21, 22, 23) for the detection of one or more physical operating parameters of an air filter (F), which include at least one pressure sensor (21) configured to detect the suction pressure of a filter (F) of the filtration system;
   - an interface system (11, 12, 13) adapted to produce visible and/or audible signals;

   **characterized in that** it comprises:

   - a programmable logic unit (50) functionally connected to said sensors (21, 22, 23) and configured to determine, as a function of a reference value ($P_0$) of the suction pressure, a series of pressure thresholds ($P_1$, $P_2$, $P_3$) which are equal to a fraction of said reference value ($P_0$), on the basis of an algorithm that comprises the sub-steps c1)-c2) of the method according to claim 1;

   said detection device (10) being configured to:

   - perform repeated detections of said one or more parameters by means of said sensors (21, 22, 23),
   - following each detection, compare, by means of said programmable logic unit (50), the detected pressure with said pressure thresholds ($P_1$, $P_2$, $P_3$), and
   - produce, by means of said interface system (11, 12, 13), an output message on the basis of the comparison between the detected pressure and said pressure thresholds ($P_1$, $P_2$, $P_3$).

5. The detection device (10) according to claim 4, further comprising a digital temperature sensor (23) which is configured to measure the temperature of internal electronic components of the detection device (10).

6. The detection device (10) according to claim 5, **characterized in that** it also comprises a wireless data transmission module (30), which is functionally connected to said programmable logic unit (50) and is configured to send data relating to said measurements.

7. A monitoring system (1A, 1B) for the provision of a method according to claim 2, **characterized in that** it comprises:

   - at least one detection device (10, 10') according to claim 4;
   - an electronic device (72) configured to perform said steps g) and h);
   - at least one data transfer network (9), which is functionally connected to said data transfer module (30) and to said electronic device (72) so as to allow the exchange of data between them.

8. The monitoring system (1B) according to the preceding claim, comprising a plurality of detection devices (10, 10') according to claim 6, which are connected to said electronic device by means of said at least one data transfer network (9, 9', 9", 9‴).

9. The monitoring system (1A, 1B) according to claim 7 or claim 8, wherein said electronic device (72) is a device provided with a screen, such as a tablet or a smartphone or a computer or a smartwatch or the like.

**Patentansprüche**

1. Ein Verfahren zur Überwachung des Betriebs von industriellen Luftfiltersystemen, das folgende Schritte umfasst:

   a) das Erfassen eines oder mehrerer physikalischer Betriebsparameter eines Luftfilters (F) mit Hilfe entsprechender Sensoren (21, 22, 23) die mindestens den Saugdruck des Filters (F) einschließen, welcher mit Hilfe eines Drucksensors (21) erfasst wird;
   **dadurch gekennzeichnet, dass** es weitere zusätzliche Schritte umfasst:

b) das Definieren eines gemessenen Bezugswerts ($P_0$) des Saugdrucks durch Messen eines Saugdruckwerts des Filters (F) während einer Installationsphase, wobei der gemessene Saugdruckwert des Filters (F) den gemessenen Bezugswert ($P_0$) darstellt;

c) als Funktion des gemessenen Bezugswerts ($P_0$) des Saugdrucks und auf der Grundlage eines Algorithmus (C), das Bestimmen einer Reihe von Druck-Schwellenwerten ($P_1$, $P_2$, $P_3$), die gleich einer Fraktion des gemessenen Bezugswerts ($P_0$) sind;

d) das Durchführen wiederholter Erfassungen des einen oder der mehreren Parameter, wobei nach jeder Erfassung der erfasste Druck mit den Druck-Schwellenwerten ($P_1$, $P_2$, $P_3$) verglichen wird;

e) das Erzeugen einer Ausgangsnachricht anhand des Vergleichs zwischen dem erfassten Druck und den Druck-Schwellenwerten ($P_1$, $P_2$, $P_3$);

wobei in dem Schritt c) der Algorithmus (C), um die Reihe von Druck-Schwellenwerten ($P_1$, $P_2$, $P_3$) zu erzeugen, folgende Teilschritte umfasst:

c1) das Vergleichen des gemessenen Bezugswerts ($P_0$) mit vordefinierten Bezugswerten ($P_0$, $P'_0$, $P''_0$, $P'''_0$, $P''''_0$, $P'''''_0$), die vor der Installationsphase in einer programmierbaren Logikanordnung (50) gespeichert sind, wobei jeder für einen vordefinierten Satz steht, welcher eine entsprechende Reihe von Druck-Teilwerten umfasst, die Fraktionen der vordefinierten Bezugswerte ($P_0$, $P'_0$, $P''_0$, $P'''_0$, $P''''_0$, $P'''''_0$) und/oder von Prozentwerten sind, um den entsprechenden oder nächsten vordefinierten Bezugswert ($P_0$, $P'_0$, $P''_0$, $P'''_0$, $P''''_0$, $P'''''_0$) zu bestimmen,

c2) das Bestimmen der Reihe von Druck-Schwellenwerten ($P_1$, $P_2$, $P_3$), die für anschließende Vergleiche in Schritt d) verwendet werden, basierend auf den Teilwerten oder Prozentsätzen, die zu dem Satz gehören, für welchen der entsprechende oder nächste vordefinierte Bezugswert ($P_0$, $P'_0$, $P''_0$, $P'''_0$, $P''''_0$, $P'''''_0$) steht;

wobei im Teilschritt c2) die Reihe von Druck-Schwellenwerten ($P_1$, $P_2$, $P_3$), die für anschließende Vergleiche in Schritt d) verwendet werden, als Prozentsätze oder Fraktionen des gemessenen Bezugswerts (P0) bestimmt werden, die den Prozentsätzen oder Fraktionen des identifizierten Satzes entsprechen.

2. Das Verfahren gemäß Anspruch 1, das die weiteren zusätzlichen Schritte umfasst:

f) das Senden der Erfassungen an mindestens ein Elektronikgerät (71, 72) über ein Datenübertragungsnetz (9),

g) das Ausführen, mit Hilfe des Elektronikgeräts, eines Programms, welches als eine Funktion des erfassten Saugdrucks die Luftströmungsrate (Y), die vom Filter (F) angesaugt wird, mit Hilfe einer oder mehrerer polynomischer Funktionen berechnet, die folgende Form haben:

$$Y = aX^4 + bX^3 + cX^2 + dX + f,$$

worin

Y die vom Filter angesaugte Luftströmungsrate ist,
X der erfasste Saugdruckwert ist und
$a$, $b$, $c$, $d$ und $f$ vordefinierte positive oder negative Koeffizienten sind;

h) das Erzeugen, mit Hilfe der elektronischen Vorrichtung (71, 72), einer Nachricht, die die vom Filter (F) angesaugte Luftströmungsrate angibt.

3. Das Verfahren gemäß einem oder mehreren der obigen Ansprüche, worin erfasste physikalische Betriebsparameter auch mindestens eines von Folgendem umfassen:

- die Temperatur der angesaugten Luft, erfasst mit Hilfe eines Temperatursensors (21), und
- einen Parameter, der die Vibration des Filters (F), erfasst mit Hilfe eines Beschleunigungsmessers (22), anzeigt.

4. Eine Erfassungsvorrichtung (10) zur Überwachung des Betriebs industrieller Luftfiltersysteme, die Folgendes umfasst:

- einen oder mehrere Sensoren (21, 22, 23) zur Erfassung eines oder mehrerer physikalischer Betriebsparameter eines Luftfilters (F), die mindestens einen Drucksensor (21) einschließen, ausgebildet, um den Saugdruck eines Filters (F) des Filtersystems zu erfassen;

- ein Schnittstellensystem (11, 12, 13), ausgebildet, um sichtbare und/oder hörbare Signale zu erzeugen;
**dadurch gekennzeichnet, dass** sie Folgendes umfasst:

- eine programmierbare Logikanordnung (50), funktionell mit den Sensoren (21, 22, 23) verbunden und konfiguriert, um als eine Funktion eines Bezugswerts ($P_0$) des Saugdrucks eine Reihe von Druck-Schwellenwerten ($P_1$, $P_2$, $P_3$) zu bestimmen, die gleich einer Fraktion des Bezugswerts ($P_0$) sind, anhand eines Algorithmus, der die Teilschritte c1)-c2) des Verfahrens gemäß Anspruch 1 umfasst;

wobei die Erfassungsvorrichtung (10) ausgebildet ist, um

- mit Hilfe der Sensoren (21, 22, 23) wiederholten Erfassungen der einen oder mehreren Parameter vorzunehmen;
- nach jeder Erfassung mit Hilfe der programmierbaren Logikanordnung (50) den erfassten Druck mit den Druck-Schwellenwerten ($P_1$, $P_2$, $P_3$) zu vergleichen und
- mit Hilfe des Schnittstellensystems (11, 12, 13) eine Ausgangsnachricht auf der Grundlage des Vergleichs zwischen dem erfassten Druck und den Druck-Schwellenwerten ($P_1$, $P_2$, $P_3$) zu erzeugen.

5. Die Erfassungsvorrichtung (10) gemäß Anspruch 4, die weiter einen digitalen Temperatursensor (23) umfasst, der ausgebildet ist, um die Temperatur interner elektronischer Komponenten der Erfassungsvorrichtung (10) zu messen.

6. Die Erfassungsvorrichtung (10) gemäß Anspruch 5, **dadurch gekennzeichnet, dass** sie außerdem ein drahtloses Datenübertragungsmodul (30) umfasst, das funktionell mit der programmierbaren Logikanordnung (50) verbunden und konfiguriert ist, um Daten zu senden, die die Messungen betreffen.

7. Ein Überwachungssystem (1A, 1B) zur Bereitstellung eines Verfahrens gemäß Anspruch 2, **dadurch gekennzeichnet, dass** es Folgendes umfasst:

- mindestens eine Erfassungsvorrichtung (10, 10') gemäß Anspruch 4;
- eine elektronische Vorrichtung (72), ausgebildet, um die Schritte g) und h) durchzuführen;
- mindestens ein Datenübertragungsnetz (9), welches funktionell mit dem Datenübertragungsmodul (30) und mit der elektronischen Vorrichtung (72) verbunden ist, um den Datenaustausch zwischen ihnen zu ermöglichen.

8. Das Überwachungssystem (1B) gemäß dem obigen Anspruch, das eine Vielzahl von Erfassungsvorrichtungen (10, 10') gemäß Anspruch 6 umfasst, die mit der elektronischen Vorrichtung des mindestens einen Datenübertragungsnetzes (9, 9', 9", 9‴) verbunden sind.

9. Das Überwachungssystem (1A, 1B) gemäß Anspruch 7 oder Anspruch 8, wobei die elektronische Vorrichtung (72) eine Vorrichtung ist, die mit einem Bildschirm ausgestattet ist, wie z. B. ein Tablet, Smartphone oder ein Computer oder eine Smartwatch oder dergleichen.

**Revendications**

1. Procédé de surveillance du fonctionnement de systèmes industriels de filtration d'air, qui comprend les étapes suivantes :

a) détecter un ou plusieurs paramètres physiques de fonctionnement d'un filtre à air (F) à l'aide de capteurs respectifs (21, 22, 23), qui comprennent au moins la pression d'aspiration du filtre (F), qui est détectée à l'aide d'un capteur de pression (21) ;
**caractérisé en ce qu'**il comprend les étapes supplémentaires suivantes :

b) définir une valeur de référence mesurée ($P_0$) de la pression d'aspiration en mesurant une valeur de pression d'aspiration du filtre (F) pendant une phase d'installation, ladite valeur de pression d'aspiration mesurée du filtre (F) constituant ladite valeur de référence mesurée ($P_0$) ;
c) en fonction de ladite valeur de référence mesurée ($P_0$) de la pression d'aspiration et sur la base d'un algorithme (C), déterminer une série de seuils de pression ($P_1$, $P_2$, $P_3$) qui sont égaux à une fraction de ladite valeur de référence mesurée ($P_0$) ;
d) effectuer des détections répétées dudit ou desdits paramètres, après chaque détection, comparer la pression détectée auxdits seuils de pression ($P_1$, $P_2$, $P_3$) ;

e) produire un message de sortie sur la base de la comparaison entre la pression détectée et lesdits seuils de pression ($P_1$, $P_2$, $P_3$) ;

où, dans ladite étape c), ledit algorithme (C), afin de produire la série de seuils de pression ($P_1$, $P_2$, $P_3$), comprend les sous-étapes suivantes :

c1) comparer ladite valeur de référence mesurée ($P_0$) avec des valeurs de référence prédéterminées ($P_0$, $P'_0$, $P''_0$, $P'''_0$, $P''''_0$, $P'''''_0$) qui sont stockées dans une unité logique programmable (50) avant ladite phase d'installation, chacune indiquant un ensemble prédéterminé qui comprend une série respective de sous-valeurs de pression qui sont des fractions des valeurs de référence prédéterminées ($P_0$, $P'_0$, $P''_0$, $P'''_0$, $P''''_0$, $P'''''_0$) et/ou de pourcentages, afin d'identifier la valeur de référence prédéterminée correspondante ou la plus proche ($P_0$, $P'_0$, $P''_0$, $P'''_0$, $P''''_0$) ;

c2) définir la série de seuils de pression ($P_1$, $P_2$, $P_3$) qui sont utilisés pour les comparaisons ultérieures à l'étape d), sur la base desdites sous-valeurs ou pourcentages appartenant à l'ensemble dont la valeur de référence prédéterminée correspondante ou la plus proche ($P_0$, $P'_0$, $P''_0$, $P'''_0$, $P''''_0$, $P'''''_0$) est indicative ;

dans la sous-étape c2), la série de seuils de pression ($P_1$, $P_2$, $P_3$) qui sont utilisés pour les comparaisons ultérieures à l'étape d) étant déterminée sous forme de pourcentages ou de fractions de la valeur de référence mesurée ($P_0$) qui correspondent auxdits pourcentages ou fractions de l'ensemble identifié.

2. Procédé selon la revendication 1, comprenant les étapes supplémentaires suivantes :

f) envoyer, via un réseau de transfert de données (9), lesdites détections à au moins un dispositif électronique (71, 72) ;

g) exécuter, au moyen dudit dispositif électronique, un programme qui calcule, en fonction de la pression d'aspiration détectée, le débit d'air (Y) aspiré par le filtre (F) au moyen d'une ou plusieurs fonctions polynomiales ayant la forme

$$Y = aX^4 + bX^3 + cX^2 + dX + f,$$

où :

$Y$ est le débit d'air aspiré par le filtre,
$X$ est la valeur de pression d'aspiration détectée, et
$a$, $b$, $c$, $d$ et $f$ sont des coefficients positifs ou négatifs prédéterminés ;

h) produire, au moyen dudit dispositif électronique (71, 72), un message indiquant ledit débit d'air aspiré par le filtre (F).

3. Procédé selon une ou plusieurs des revendications précédentes, où les paramètres physiques de fonctionnement détectés comprennent également au moins l'un des éléments suivants :

- la température de l'air aspiré, détectée au moyen d'un capteur de température (21) ; et
- un paramètre indiquant la vibration du filtre (F), détecté au moyen d'un accéléromètre (22).

4. Dispositif de détection (10) pour surveiller le fonctionnement de systèmes industriels de filtration d'air, qui comprend :

- un ou plusieurs capteurs (21, 22, 23) pour la détection d'un ou plusieurs paramètres physiques de fonctionnement d'un filtre à air (F), qui comprennent au moins un capteur de pression (21) configuré pour détecter la pression d'aspiration d'un filtre (F) du système de filtration ;
- un système d'interface (11, 12, 13) adapté pour produire des signaux visibles et/ou audibles ;
**caractérisé en ce qu'**il comprend :

- une unité logique programmable (50) connectée fonctionnellement auxdits capteurs (21, 22, 23) et configurée pour déterminer, en fonction d'une valeur de référence ($P_0$) de la pression d'aspiration, une série de seuils de pression ($P_1$, $P_2$, $P_3$) qui sont égaux à une fraction de ladite valeur de référence ($P_0$), sur la base d'un algorithme qui comprend les sous-étapes c1)-c2) du procédé selon la revendication 1 :

ledit dispositif de détection (10) étant configuré pour :

- effectuer des détections répétées dudit ou desdits paramètres au moyen desdits capteurs (21, 22, 23),
- après chaque détection, comparer, au moyen de ladite unité logique programmable (50), la pression détectée avec lesdits seuils de pression ($P_1$, $P_2$, $P_3$), et
- produire, au moyen dudit système d'interface (11, 12, 13), un message de sortie sur la base de la comparaison entre la pression détectée et lesdits seuils de pression ($P_1$, $P_2$, $P_3$).

5. Le dispositif de détection (10) selon la revendication 4, comprenant en outre un capteur de température numérique (23) qui est configuré pour mesurer la température des composants électroniques internes du dispositif de détection (10).

6. Le dispositif de détection (10) selon la revendication 5, **caractérisé en ce qu'**il comprend également un module de transmission de données sans fil (30), qui est connecté de manière fonctionnelle à ladite unité logique programmable (50) et est configuré pour envoyer des données relatives auxdites mesures.

7. Système de surveillance (1A, 1B) pour la mise en œuvre d'un procédé selon la revendication 2, **caractérisé en ce qu'**il comprend :

- au moins un dispositif de détection (10, 10') selon la revendication 4 ;
- un dispositif électronique (72) configuré pour exécuter lesdites étapes g) et h) ;
- au moins un réseau de transfert de données (9), qui est connecté de manière fonctionnelle audit module de transfert de données (30) et audit dispositif électronique (72) afin de permettre l'échange de données entre eux.

8. Système de surveillance (1B) selon la revendication précédente, comprenant une pluralité de dispositifs de détection (10, 10') selon la revendication 6, qui sont connectés audit dispositif électronique au moyen dudit au moins un réseau de transfert de données (9, 9', 9", 9‴).

9. Système de surveillance (1A, 1B) selon la revendication 7 ou la revendication 8, où ledit dispositif électronique (72) est un dispositif muni d'un écran, tel qu'une tablette ou un smartphone ou un ordinateur ou une montre connectée ou similaire.

Fig. 1

UART

Fig. 2

# Dynamic thresholds

*Fig. 3*

EP 4 201 502 B1

Fig. 4

Fig. 5

Fig. 6

Fig.7

Outlet air flow

F

R

C1

Inlet air flow

Acquisition pressure P0
(SET POINT procedure)

C2

CHECK FAILED

Checking the operating
range of the sensor
P0>=150Pa or P0<2000Pa

The sensor cannot
be installed

CHECK PASSED

The sensor shows an
error to the end user

The P0 value is
compared with the
various threshold sets

C3

C

SET 0
150 Pa

SET 1
300 Pa

SET 2
500 Pa

SET 3
700 Pa

SET 4
900 Pa

SET 5
1200 Pa

C4

Setting of the SET
threshold suitable for the
operating condition
of the filtration system

The sensor works
correctly

EP 4 201 502 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020215915 A